Europäisches Patentamt

(19) European Patent Office    (11) Publication number: **0 290 160**
Office européen des brevets                          B1

(12)                    **EUROPEAN PATENT SPECIFICATION**

(45) Date of publication of the patent specification:    (51) Int. Cl.⁵: **B60B 33/00**, B60C 19/08,
28.11.90                                                  B60R 16/06

(21) Application number: **88303506.5**

(22) Date of filing: **19.04.88**

(54) Castors.

(30) Priority: **05.05.87 GB 8710604**                    (73) Proprietor: **GUY-RAYMOND ENGINEERING COMPANY**
                                                        **LIMITED, Rollesby Road, King's Lynn Norfolk**
                                                        **PE30 4LX(GB)**

(43) Date of publication of application:
**09.11.88 Bulletin 88/45**                             (72) Inventor: **Daniels, Raymond Robert James, "Woodside"**
                                                        **North Junction, King's Lynn Norfolk(GB)**

(45) Publication of the grant of the patent:
**28.11.90 Bulletin 90/48**                             (74) Representative: **Abbie, Andrew Kenneth et al, R.G.C.**
                                                        **Jenkins & Co. 26 Caxton Street, London SW1H 0RJ(GB)**

(84) Designated Contracting States:
**AT CH DE FR IT LI NL SE**

(56) References cited:
**US-A- 2 324 589**
**US-A- 2 396 848**
**US-A- 2 686 891**

## Description

This invention relates to castors, and particularly to castors for use in furniture such as chairs, tables, trollies, beds and cabinets to enable such furniture to be moved.

When such furniture is liable to become charged with static electricity, there is the possibility of undesirable sudden discharges occurring from the furniture.

An object of the invention is to provide a castor which provides an electrical path to enable any static electric charge to leak from furniture to which it is fitted.

Accordingly the invention includes a castor comprising a body, a castor wheel mounted on said body and a stem extending from and rotatable in said body for mounting said castor on a piece of furniture, wherein an outer peripheral portion of the wheel comprises an electrically conductive material, at least the outer surface of the stem is electrically conductive and an electrical connection means is biased into wiping electrical contact with said outer peripheral portion of the wheel and the outer surface of the stem to provide an electrical path therebetween.

The wheel of the castor may be formed of plastics material since although plastics material per se are electrically insulative, said outer peripheral portion of the wheel can be formed of a plastics material which is loaded to render it electrically conductive.

Preferably said outer peripheral portion extends across the whole axial extent of the wheel at the outer periphery thereof.

In an embodiment of the invention, to be described hereinafter, said electrical connection means is biased into wiping contact with said outer peripheral portion at a side face thereof.

In this embodiment, said wheel is mounted to one side of the stem, and said electrical connection means is disposed between said wheel and stem.

Advantageously, the wheel is mounted on a spindle extending from said body and said electrical connection means comprises a spring member located on said spindle and provided with portions which are oppositely biased into engagement with said stem and said side face.

This spring member may be elongate and said portions may be provided on a plurality of longitudinally extending fingers thereof, at least one of which fingers is directed towards said stem, and at least one other of which fingers is directed towards said side face.

In such an arrangement the or each finger directed towards said stem may extend through an aperture in said body into engagement with said stem.

The above-mentioned embodiment is a twin-wheeled castor with a second wheel mounted to the other side of said stem and a second said electrical connection means is disposed between said second wheel and stem.

In order that the invention may be well understood, the embodiment thereof referred to above, which is given by way of example only, will now be described, reference being made to the accompanying drawings in which:

Figures 1 to 3 are respectively side, front and top plan views of a twin wheel castor;

Figure 4 is a side view of the same twin wheel castor with one wheel removed and the other wheel part broken away; and

Figure 5 is a section along the line V-V in Figure 4.

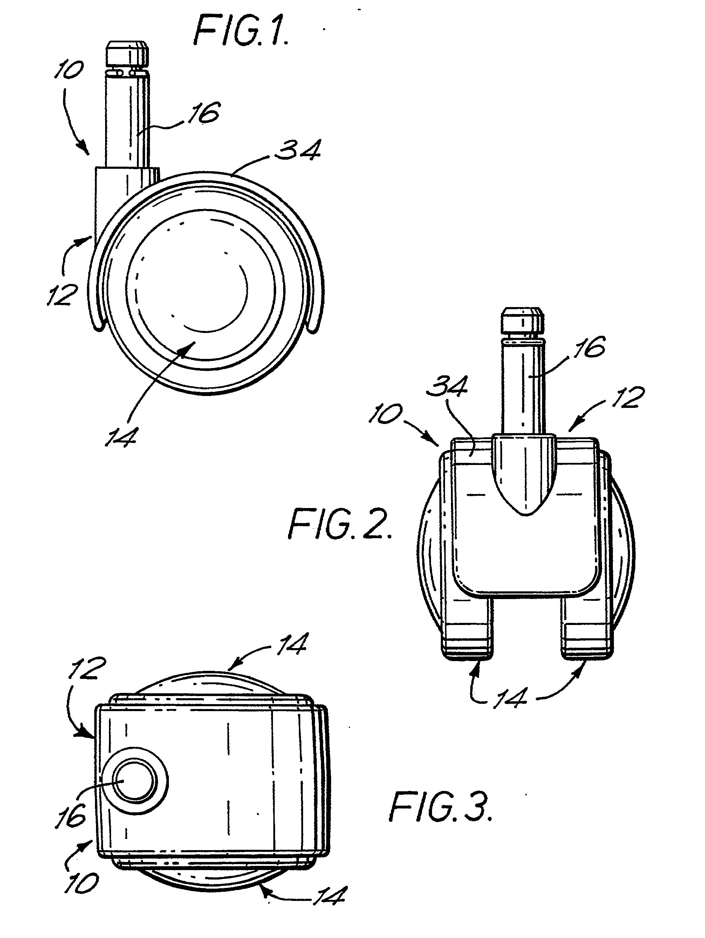

Referring first to Figures 1 to 3, the illustrated castor 10 generally comprises a body 12, of a plastics material, for example a polyamide, two plastics castor wheels 14 mounted on the body and a metal stem 16 extending from the rotatable in the body 12 for mounting the castor 10 on a piece of furniture.

The body 12 also includes a hood 34 which extends over the wheels.

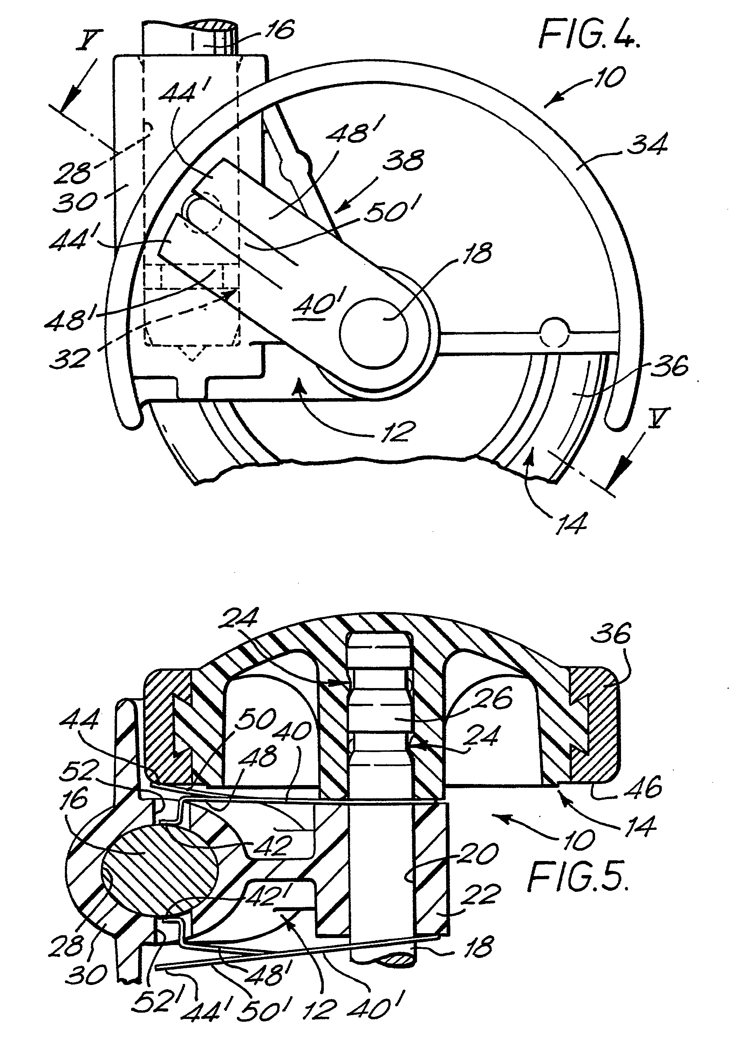

Referring now to Figures 4 and 5, the wheel 14 shown is mounted to one side of the stem 16 and the non-illustrated wheel is mounted to the other side of the stem.

The two wheels are rotatably mounted on respective end portions of a spindle 18 which is mounted in a through-bore 20 of a boss 22 of the body 12 so as to extend from the boss on each side thereof. In the illustrated embodiment each wheel is axially retained on its respective spindle end portion by interengaging groove and rib means 24 shown in Figure 2 in relation to the mounting of wheel 14 on spindle end portion 26.

The stem 16 is rotatably mounted in a bore 28 of a boss 30 of the body 12 and is axially retained therein by interengaging groove and rib means 32.

In order to provide an electrical path to enable leakage of any static electric charge in an item of furniture to which the castor is fitted an outer peripheral portion 36 of the wheel 14 comprises an electrically conductive material and an electrical connection means 38 is biased into wiping electrical contact with the portion 36 and the outer surface of the stem to provide an electrical path therebetween. This electrical path extends to the item of furniture to which the stem is fitted in use.

In the illustrated castor the stem is made of an electrically conductive metal, but it will be understood that only the outer surface of the stem need be electrically conductive in order to provide the above-mentioned electrical path.

In the illustrated embodiment, the wheel 14 is formed of plastics material and the electrically conductive outer peripheral portion 34, which is shown as extending across the whole axial extent of the wheel at the outer periphery thereof, is a plastic material which is loaded to render it electrically conductive. Because of its loading with electrically conductive filler material the strength of the plastics of the portion 34 is reduced. However this is acceptable since this portion 34 comprises only a small proportion of the structure of the wheel and is subjected to compressive forces only in use.

The electrical connection means 38 is disposed between the wheel 14 and the stem 16 and comprises a spring member 40 of an electrically conductive metallic material, for example phosphor bronze. This spring member 40 is located on the spindle 18 and is provided with portions 42 and 44 which are oppositely biased into engagement with the stem 16 and a side face 46 of the electrically conductive portion 36 of the wheel 14.

As illustrated, the spring member 40 is elongate and the portions 42, 44 are provided on a plurality of longitudinally extending fingers 48,50 of the member which are directed respectively towards the stem 16 and side face 46. As illustrated the member 40 comprises one such finger 48 and two such fingers 50, the latter being disposed one to each side of the former which itself extends through an aperture 52 in the boss 30 into engagement with the stem 16.

Of course, other arrangements and numbers of fingers are possible providing the spring member includes one finger directed towards the stem and one other directed towards the side face 46 to provide an electrical connection between the stem and side face.

In the illustrated embodiment the wheel not shown in Figures 4 and 5 is of a like construction to the wheel 14 illustrated (although this is not essential) and a second electrical connection means is disposed between this wheel and the stem in like manner to the connection means 38. This second connection means is illustrated in the drawings and designated 38' with parts thereof corresponding to like parts of connection means 38 indicated by the designations provided with primes.

## Claims

1. A castor (10) comprising a body (12), a castor wheel (14) mounted on said body and a stem extending from and rotatable in said body for mounting said castor on a piece of furniture, wherein an outer peripheral portion (36) of the wheel comprises an electrically conductive material, at least the outer surface of the stem (16) is electrically conductive and an electrical connection means (38) is biased into wiping electrical contact (42, 44) with said outer peripheral portion of the wheel and the outer surface of the stem to provide an electrical path therebetween.

2. A castor as claimed in claim 1, wherein the said wheel (14) is formed of plastics material, said outer peripheral portion thereof being a plastics material which is loaded to render it electrically conductive.

3. A castor as claimed in claim 1 or 2, wherein said outer peripheral portion extends across the whole axial extent of the wheel at the outer periphery thereof.

4. A castor as claimed in claim 1, 2 or 3, wherein said electrical connection means is biased into wiping contact with said outer peripheral portion at a side face thereof.

5. A castor as claimed in claim 4, wherein said wheel (14) is mounted to one side of the stem (16), and said electrical connection means is disposed between said wheel and stem.

6. A castor as claimed in claim 5, wherein said wheel is mounted on a spindle (18) extending from said body and said electrical connection means comprises a spring member (40) located on said spindle and provided with portions which are oppositely biased into engagement with said stem and said side face.

7. A castor as claimed in claim 6, wherein said spring member (40) is elongate and said portions are provided on a plurality of longitudinally extending fingers (48, 50) thereof, at least one of which fingers is directed towards said stem, and at least one other of which fingers is directed towards said side face.

8. A castor as claimed in claim 7, wherein the or each finger directed towards said stem extends through an aperture (52) in said body into engagement with said stem.

9. A castor as claimed in any one of claims 5 to 8, wherein a second said wheel is mounted to the other side of said stem and a second said electrical connection means is disposed between said second wheel and stem.

## Patentansprüche

1. Eine Laufrolle (10) umfaßt einen Gehäusekörper (12), ein Laufrad (14), das an dem Gehäusekörper gehalten ist, sowie einen Zapfen, der von dem Gehäusekörper ausgeht und drehbar hierin gehalten ist, zur Befestigung der Laufrolle an einem Möbelstück, wobei ein äußerer Peripherbereich (36) des Rades ein elektrisch leitendes Material trägt, während mindestens die äußere Oberfläche des Zapfens (16) elektrisch leitend ist, und eine elektrische Anschlußeinrichtung (38) in elektrischen Gleitkontakt (42, 44) gedrückt wird mit dem äußeren peripheren Bereich des Rades und der äußeren Oberfläche des Zapfens, zur Herstellung eines elektrischen Leitungsweges hierzwischen.

2. Laufrolle nach Anspruch 1, bei welcher das Rad (14) aus einem Kunststoffmaterial hergestellt ist, wobei sein äußerer peripherer Bereich aus einem Kunststoffmaterial besteht, das beladen ist, um dies elektrisch leitend zu machen.

3. Laufrolle nach einem der Ansprüche 1 oder 2, bei welcher der äußere periphere Bereich sich über das gesamte axiale Ausmaß des Rades an seiner äußeren Peripherie erstreckt.

4. Laufrolle nach einem der Ansprüche 1, 2 oder 3, bei welcher die elektrische Anschlußeinrichtung in Gleitkontakt mit dem äußeren peripheren Bereich an dessen Seitenfläche gedrückt wird.

5. Laufrolle nach Anspruch 4, bei welcher das Rad (14) auf einer Seite des Zapfens (16) montiert ist und die elektrische Anschlußeinrichtung sich zwischen dem Rad und dem Zapfen befindet.

6. Laufrolle nach Anspruch 5, bei welcher das Rad auf einer Welle (18) gehalten ist, die von dem Gehäusekörper ausgeht, und die elektrische Anschlußeinrichtung ein Federelement (40) umfaßt, das sich auf der Welle befindet und mit Bereichen versehen ist, die in entgegengesetzte Richtung und in Anlage mit dem Zapfen und der Seitenfläche gedrückt werden.

7. Laufrolle nach Anspruch 6, bei welcher das Federelement (40) länglich ausgebildet ist und die Bereiche auf einer Mehrzahl sich in die Länge erstreckender Finger (48, 50) angeordnet sind, wobei mindestens einer der Finger auf den Zapfen und mindestens ein weiterer der Finger auf die Seitenfläche gerichtet ist.

8. Laufrolle nach Anspruch 7, bei welcher der oder jeder auf den Zapfen gerichtete Finger sich durch eine Öffnung (52) in dem Gehäusekörper in Anlage mit dem Zapfen erstreckt.

9. Laufrolle nach einem der Ansprüche 5 bis 8, bei welcher ein zweites Rad auf der anderen Seite des Zapfens montiert ist und eine zweite elektrische Anschlußeinrichtung sich zwischen dem zweiten Rad und dem Zapfen befindet.

## Revendications

1. Roulette (10) comportant un corps (12), une roue (14) montée sur ledit corps et une tige qui s'étend à partir dudit corps en étant mobile en rotation dans celui-ci, pour permettre un montage de ladite roulette sur un meuble, dans laquelle une partie périphérique extérieure (36) de la roue est constituée d'un matériau électriquement conducteur, et au moins la surface extérieure de la tige (16) est électriquement conductrice, des moyens de connexion électrique (38) étant sollicités pour venir en contact électrique à frottement (42, 44) avec ladite partie périphérique extérieure de la roue et la surface extérieure de la tige, pour établir entre elles un trajet électrique.

2. Roulette selon la revendication 1, dans laquelle ladite roue (14) est faite d'un matériau en matière plastique, tandis que ladite partie périphérique extérieure de celle-ci est un matériau en matière plastique chargé pour être rendu électriquement conducteur.

3. Roulette selon la revendication 1 ou 2, dans laquelle ladite partie périphérique extérieure s'étend sur la totalité de la dimension axiale de la roue, au niveau de la périphérie extérieure de celle-ci.

4. Roulette selon la revendication 1, 2 ou 3, dans laquelle lesdits moyens de connexion électrique sont sollicités pour venir en contact par frottement avec ladite partie périphérique extérieure, au niveau d'une face latérale de celle-ci.

5. Roulette selon la revendication 4, dans laquelle ladite roue (14) est montée d'un côté de la tige (16), lesdits moyens de connexion électrique étant interposés entre ladite roue et ladite tige.

6. Roulette selon la revendication 5, dans laquelle ladite roue est montée sur un axe (18) qui s'étend depuis ledit corps, tandis que lesdits moyens de connexion électrique comportent un organe élastique (40) positionné sur ledit axe et pourvu de parties sollicitées d'une manière opposée pour venir en contact avec ladite tige et ladite face latérale.

7. Roulette selon la revendication 6, dans laquelle ledit organe élastique (40) est allongé, tandis que lesdites parties sont prévues sur plusieurs doigts (48, 50) de celui-ci, qui s'étendent longitudinalement; et dont au moins un premier doigt est orienté en direction de ladite tige, tandis qu'au moins un second doigt est orienté en direction de ladite face latérale.

8. Roulette selon la revendication 7, dans laquelle le ou les doigts orientés en direction de ladite tige s'étendent à travers un orifice (52) ménagé dans ledit corps, pour venir en contact avec ladite tige.

9. Roulette selon l'une quelconque des revendications 5 à 8, dans laquelle une seconde roue est montée de l'autre côté de ladite tige, tandis que des seconds moyens de connexion électrique sont interposés entre ladite seconde roue et ladite tige.

FIG.1.

FIG.2.

FIG.3.

EP 0 290 160 B1

FIG.4.

FIG.5.